# EUROPÄISCHE PATENTSCHRIFT

(11) **EP 2 656 724 B1**
(45) Veröffentlichungstag und Bekanntmachung des Hinweises auf die Patenterteilung: **25.09.2019**
(21) Anmeldenummer: 13159971.4
(22) Anmeldetag: 19.03.2013
(51) Int. Cl.: A01D 43/08, A01D 34/835

(54) **Maschine zur Ernte stängelartiger Pflanzen mit einem unterhalb einer Schneidscheibe angeordneten Schlagkörper zum Zerfasern der Stoppeln**
Machine for harvesting stalk-like plants with an impact body for fraying stubble to be arranged below a circular saw blade
Machine destinée à la récolte de plantes à tiges dotée d'un corps de battage disposé au-dessous d'un disque de coupe pour défibrer les chaumes

(30) Priorität: 24.04.2012 DE 102012206720
(43) Veröffentlichungstag der Anmeldung: 30.10.2013
(73) Patentinhaber: Maschinenfabrik Kemper GmbH & Co. KG, 48703 Stadtlohn (DE)
(72) Erfinder: Terhart, Daniel, 46348 Raesfeld (DE); Jeusfeld, Martin, 46325 Borken-Burlo (DE); Wübbels, Andreas, 46325 Borken-Gemenwirthe (DE); Köhne, Jörg, 46359 Heiden (DE); Sueck, Gregor, 48653 Coesfeld (DE); Schild, Jan-Dirk, 48302 Nottuln (DE)
(74) Vertreter: Holst, Sönke

(56) Entgegenhaltungen:
- DE-A1-102006 051 619
- DE-B3-102005 055 621
- DE-B3-102007 035 791
- US-A1- 2011 179 758

## Beschreibung

Die Erfindung betrifft eine Maschine zur Ernte stängelartiger Pflanzen mit einer oder mehreren seitlich nebeneinander angeordneten Mäh- und Einzugseinrichtungen, die jeweils eine untere Schneidscheibe zum Abschneiden von Pflanzenstängeln von im Erdboden verbleibenden Stoppeln und über der Schneidscheibe übereinander angeordnete Förderelemente mit um ihren Umfang verteilten Aussparungen zur Aufnahme und Förderung der Pflanzenstängel umfassen, wobei unterhalb der Schneidscheibe ein in Drehung versetzbarer Schlagkörper mit einer stumpfen vorlaufenden Fläche angeordnet ist und die vorlaufende Fläche des Schlagkörpers in axialer Richtung und/oder in der Umfangsrichtung der Schneidscheibe konvex abgerundet ist.

### Stand der Technik

Maschinen eingangs genannter Art dienen in der Landwirtschaft in erster Linie zum Ernten von Maispflanzen. Die Pflanzen werden durch rotierende, untere Messer abgeschnitten, in Aussparungen koaxial über den Messern angebrachter Förderscheiben aufgenommen und schließlich in den Einzugskanal eines Feldhäckslers verbracht. Der Feldhäcksler ist mit einer Häckseltrommel zum Zerkleinern der Pflanzen und einem Auswurfkrümmer versehen, durch den die gehäckselten Pflanzen auf ein Transportfahrzeug verbracht werden. Die gehäckselten Pflanzen werden üblicherweise als Futter für Tiere oder zur Biogaserzeugung verwendet.

Nach der Ernte verbleiben noch Stoppeln der Pflanzen im Erdboden. Diese Stoppeln dienen den Raupen des gefürchteten Maiszünslers (*Ostrinia nubilalis*) als Überwinterungsraum. Die Raupen verpuppen sich im Frühling und fliegen bald danach als Schmetterlinge aus, um ihre Eier an den Blattunterseiten der Maispflanzen abzulegen. Nach dem Schlüpfen frisst sich die neue Generation der Raupen in die Stängel der Pflanzen, wo sie gegen Fressfeinde und Insektizide geschützt sind, und bis in die Stoppeln, woraufhin der Zyklus von neuem beginnt. Die Pflanzen werden durch die Maiszünsler schwer geschädigt, sodass der Landwirt hohe Ernteverluste erleidet.

Es wurde bereits vorgeschlagen, Erntevorsätze mit einer durch Lenker unmittelbar über dem Erdboden geführten Einrichtung auszustatten, welche die Pflanzenstoppeln dicht über dem Boden abschneidet und oberen Stängelteile auf eine Länge von maximal 5 cm zerkleinert oder zerfasert, um den Überwinterungsraum des Maiszünslers zu zerstören (DE 10 2004 020 447 A1), oder unterhalb eines Maispflückers eine Walze über den Boden rollen zu lassen (US 2011/0179758 A1).

Weiterhin wird in der DE 37 13 025 A1 eine Maschine für die Maisernte beschrieben, die die Pflanzen mit paarweise angeordneten Einzugsketten durch einen Kanal einzieht und einem Feldhäcksler aufgibt. Unterhalb der vorderen Kettenumlenkritzel sind Schneidscheiben zum Abschneiden der Pflanzen angeordnet, unterhalb denen wiederum mehrarmige Schlägersterne befestigt sind, die gemeinsam mit den Schneidscheiben rotieren und die Pflanzenstoppeln zerschlagen oder zerfasern, um sie biegeweich zu machen und auf diese Weise zu verhindern, dass die Stoppeln die Gummireifen der Erntemaschine oder eines anderen Fahrzeugs auf dem Feld beschädigen. Anstelle der Schlägersterne können auch rückwärtig der Maschine angebrachte Walzen, Schare oder Schneidtrommeln verwendet werden.

Schließlich ist es bekannt, unterhalb der Schneidscheibe zylinder- oder quaderförmige Räumer anzubringen, die sich näherungsweise in Umfangsrichtung erstrecken und dazu dienen, Erntegutreste von unterhalb der Schneidscheibe angeordneten Halterungen abzufördern, vgl. die als gattungsbildend angesehene DE 10 2007 035 791 B3.

### Aufgabe der Erfindung

Bei der Anordnung nach DE 10 2004 020 477 A1 ist als unvorteilhaft anzusehen, dass der untere Teil des Halms intakt bleibt, sodass dort noch Maiszünsler überleben können. Bei der DE 37 13 025 A1 sind der genaue Aufbau und die Wirkungsweise der Schlägersterne unklar. Die Räumer der DE 10 2007 035 791 B3 erstrecken sich parallel zur Drehachse der Mäh- und Einzugseinrichtungen und sind zylindrischen oder rechteckigen Querschnitts, was zu einem geringfügigen Zerfasern der Stoppeln an den Kanten der Räumer führt, aber den Überlebensraum des Maiszünslers kaum beeinträchtigt.

Die der Erfindung zu Grunde liegende Aufgabe wird darin gesehen, eine Maschine zur Ernte stängelartiger Pflanzen mit Mäh- und Einzugseinrichtungen bereitzustellen, die bereits bei der Ernte eine hinreichende Beeinträchtigung des Überwinterungsraums des Maiszünslers in den Stoppeln der Maispflanzen ermöglicht.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Maschine zur Ernte stängelartiger Pflanzen umfasst eine oder mehrere, bezüglich einer Vorwärtsrichtung seitlich nebeneinander angeordnete Mäh- und Einzugseinrichtung(en), die jeweils eine untere, durch einen Antrieb in Drehung versetzbare oder stationäre Schneidscheibe zum Abschneiden von Pflanzenstängeln von im Erdboden verbleibenden Stoppeln und koaxial über der Schneidscheibe übereinander angeordnete Förderelemente mit um ihren Umfang verteilten Aussparungen zur Aufnahme und Förderung der Pflanzenstängel aufweisen. Unterhalb jeder Schneidscheibe ist ein (mit gleicher Drehzahl wie eine rotierende Schneidscheibe und dazu gleichsinnig) in Drehung versetzbarer Schlagkörper mit einer stumpfen vorlaufenden Fläche angeordnet, dessen in Drehrichtung vorlaufende Fläche in axialer Richtung der Schneidscheibe und/oder in der Umfangsrichtung der Schneidscheibe konvex abgerundet ist.

Mit anderen Worten ist unterhalb der Schneidscheibe ein Schlagkörper befestigt, der sich im Betrieb dreht und dessen vorlaufende Fläche in axialer Richtung der Schneidscheibe und/oder in der Drehrichtung der Schneidscheibe abgerundet ist und somit eine konvexe, vorlaufende Fläche bildet. Die Stoppeln der Pflanzen werden durch den abgerundeten Schlagkörper, der aufgrund seiner abgerundeten Form keine Schneidwirkung hat, nicht zerschnitten, sondern durch den stumpfen Aufprall gründlich, und bei hinreichend niedriger Arbeitshöhe bis zum Erdboden hin zerfasert. Auf diese Weise wird der Überwinterungsraum des Maiszünslers zerstört und zusätzlich wird die Rotte der Stoppeln gefördert, was dem Maiszünsler im Frühjahr die Nahrungsquelle nimmt. Die Zerfaserungswirkung der Schlagkörper reicht umso tiefer und ist somit umso erfolgreicher bei der Zerstörung des Überwintersraums der Maiszünsler, je niedriger der Schlagkörper über den Boden geführt wird.

Der Schlagkörper ist am Außenumfang eines sich koaxial zur Drehachse der Schneidscheibe erstreckenden Ringes angebracht, der mit einem Flansch verbunden ist, an dem Segmente der durch einen Antrieb in Drehung versetzbaren Schneidscheibe befestigt sind. Der Schlagkörper ist demnach starr mit der Schneidscheibe gekoppelt, was den Vorteil hat, dass - ggf. mit Ausnahme von einer erforderlich werdenden Verstärkung des Flanschs und/oder der Antriebsverbindung des Flanschs zum ihn in Drehung versetzenden Getriebe gegenüber bisherigen Maschinen - keine weiteren Änderungen an der Maschine erforderlich sind und keine zusätzlichen Elemente benötigt werden, die den Bauraum und den Aufwand vergrößern würden.

Der Querschnitt des Schlagkörpers ist insbesondere kreisförmig oder halbkreisförmig, wobei im zweiten Fall der Halbkreis in Drehrichtung vorläuft.

Vorzugsweise sind mehrere Schlagkörper äquidistant um ihre Drehachse verteilt.

### Ausführungsbeispiele

In den Zeichnungen sind zwei nachfolgend näher beschriebene Ausführungsbeispiele der Erfindung dargestellt. Es zeigt:
- Fig. 1: eine perspektivische Ansicht einer Maschine zur Ernte stängelartiger Pflanzen,
- Fig. 2: eine perspektivische Ansicht einer Schneidscheibe mit einer ersten Ausführungsform daran angebrachter Schlagkörper,
- Fig. 3: eine seitliche Ansicht einer Schneidscheibe mit einer zweiten Ausführungsform daran angebrachter Schlagkörper, und
- Fig. 4: eine seitliche Ansicht einer erfindungsgemäßen Maschine beim Erntevorgang.

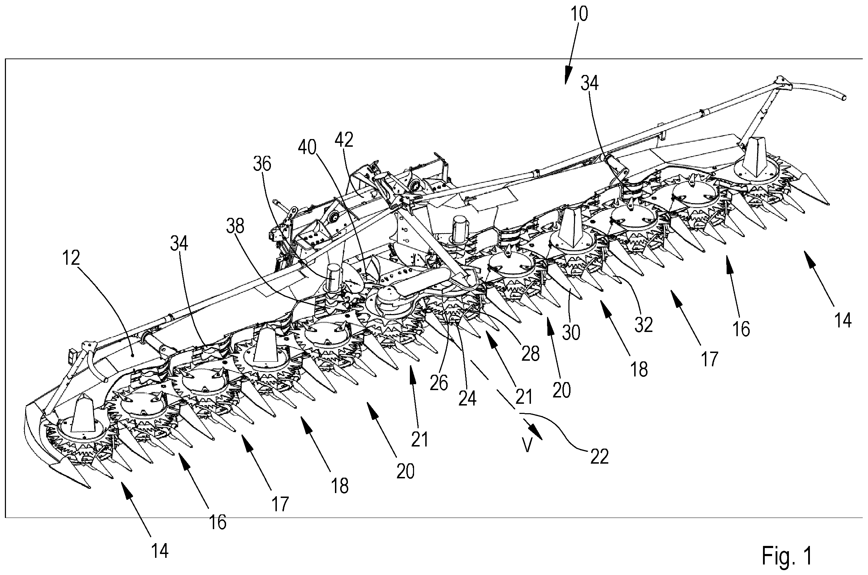

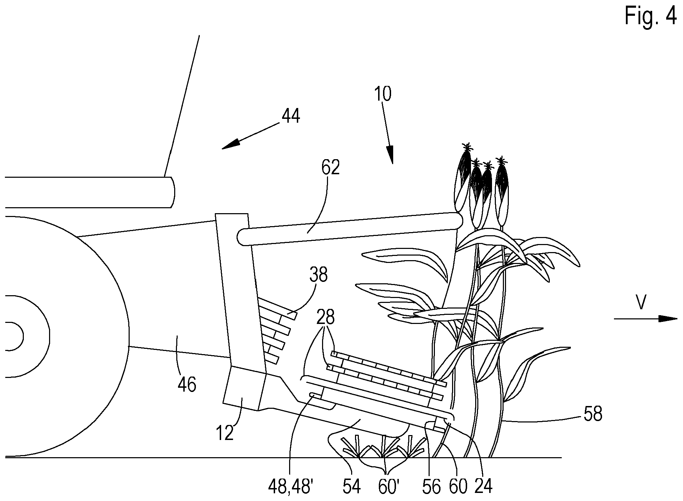

An einem Rahmen 12 einer in der Figur 1 in einer Draufsicht dargestellten Maschine 10 zur Ernte stängelartiger Pflanzen sind beidseits einer Längsmittelebene 22 jeweils sechs Mäh- und Einzugseinrichtungen 14, 16, 17, 18, 20 und 21 seitlich nebeneinander befestigt. Die Mäh- und Einzugseinrichtungen 14 bis 21 setzen sich jeweils aus einer unteren, in Drehung versetzbaren Schneidscheibe 24 und mehreren koaxial darüber angeordneten, in Drehung versetzbaren, scheibenförmigen Förderelementen 28 zusammen. Die Schneidscheiben 24 sind am Rand mit scharfen Zähnen ausgestattet oder anderweitig geschärft, um die Pflanzenstängel von den im Boden verbleibenden Stoppeln abzutrennen. Die Stängel finden in Ausbuchtungen 26 der Förderelemente 28 Aufnahme und werden wie unten beschrieben in einen die Maschine 10 tragenden und ihre beweglichen Elemente antreibenden und die Maschine 10 in einer Vorwärtsrichtung V über ein Feld bewegenden Feldhäcksler 44 (vgl. Figur 4) transportiert. Im Folgenden beziehen sich Richtungsangaben, wie vorn und hinten, auf die Vorwärtsrichtung V.

Zwischen den Mäh- und Einzugseinrichtungen 14 bis 21 befinden sich jeweils Stängelteiler 30, um die Pflanzen seitlich abzulenken und in den Eingriffsbereich der Mäh- und Einzugseinrichtungen 14 bis 20 zu verbringen, wenn erforderlich. An den Vorderseiten der Mäh- und Einzugseinrichtungen 14 bis 20 sind kleinere Stängelteiler 32 angeordnet. Die Arbeitsbreite der Mäh- und Einzugseinrichtungen 14 bis 21 entspricht jeweils einer Reihe, d. h. etwa 0,75 m. Die Maschine 10 kann somit zwölf im Abstand von 75 cm gesäte Reihen Mais gleichzeitig ernten. Die Arbeitsbreite der Mäh- und Einzugseinrichtungen 14 bis 21 könnte aber auch kleiner oder größer (z. B. 1,5 m) sein, genau wie die Anzahl der Mäh- und Einzugseinrichtungen 14 bis 21 größer oder kleiner als dargestellt sein kann.

Beim Erntebetrieb werden die Mäh- und Einzugseinrichtungen 14 bis 21 aktiv angetrieben. Die der Längsmittelebene 22 benachbarten, inneren Mäh- und Einzugseinrichtungen 21 fördern die Pflanzen zunächst nach außen und nach hinten, wie auch die jeweils vier nach außen folgenden Mäh- und Einzugseinrichtungen 20, 18, 17, 16, während die äußeren Mäh- und Einzugseinrichtungen 14 sich gegensinnig dazu drehen. Wie anhand der Figur 1 erkennbar ist, übergeben die äußeren Mäh- und Einzugseinrichtungen 14 ihr Erntegut etwa in der Mitte zwischen den Drehachsen der Mäh- und Einzugseinrichtungen 14, 16 an die nächst inneren Mäh- und Einzugseinrichtungen 16. An der Rückseite der nächst inneren Mäh- und Einzugseinrichtungen 16 und der jeweils nach innen folgenden Mäh- und Einzugseinrichtungen 17, 18, 20 wird das Erntegut durch rückwärtig des Querförderkanals der Maschine 10 und des darin geförderten Erntegutstroms angeordnete, rotativ angetriebene, äußere Querfördertrommeln 34, die rotativ angetriebene Förderscheiben mit Aussparungen zur Aufnahme von Pflanzenstängeln umfassen, sukzessive an die Rückseiten der wiederum weiter innen angeordneten Mäh- und Einzugseinrichtungen 18, 20, 21 übergeben. An der Rückseite der weiter innen angeordneten Mäh- und Einzugseinrichtungen 20 wird das Erntegut an innere Querfördertrommeln 36 übergeben, die rotativ angetriebene Förderscheiben 38 mit Aussparungen zur Aufnahme von Pflanzenstängeln umfassen. Die inneren Querfördertrommeln 36 fördern das Erntegut dann gemeinsam mit den Rückseiten der inneren Mäh- und Einzugseinrichtungen 21 schräg nach hinten und in Richtung auf die Mitte der Maschine 10 zu, wo es durch rückwärtig des Querförderkanals angeordnete, rotativ angetriebene Abgabefördertrommeln 40 mit zur Überbrückung des Höhenunterschieds zwischen der Ebene der Mäh- und Einzugseinrichtungen 14 bis 20 und dem Einzugskanal des Feldhäckslers leicht nach vorn geneigten Drehachsen nach hinten gefördert und an den Einzugskanal 46 des Feldhäckslers 44 (s. Figur 4) abgegeben wird.

An der Rückseite des Rahmens 12 ist mittig ein Pendelrahmen 42 angebracht, der zur Befestigung der Maschine 10 am Feldhäcksler 44 dient und eine Bewegung um eine sich horizontal und in Vorwärtsrichtung V erstreckende Achse ermöglicht, die sich etwa in der Mitte des Einzugskanals 46 erstreckt.

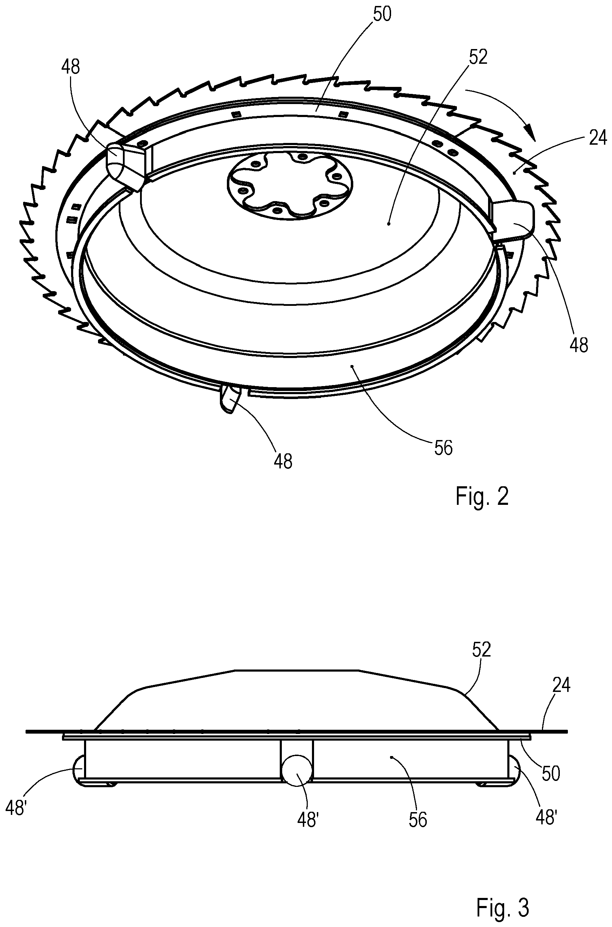

Die Figur 2 zeigt eine Schneidscheibe 24 mit darunter befestigten Schlagkörpern 48 gemäß einer ersten Ausführungsform. Die Schneidscheibe 24 setzt sich aus einzelnen Segmenten zusammen, die in an sich bekannter Weise jeweils an einem ringförmigen Flansch 50 durch Schraubverbindungen abnehm- und austauschbar befestigt sind. Der Flansch 50 ist durch einen gewölbten Deckel 52 mit einer Ausgangswelle (nicht gezeigt) eines Getriebes 54 (s. Figur 4) verbunden und in Drehung versetzbar, in der Regel mit höherer Drehzahl als die Förderelemente 26. Die Drehung erfolgt in der Richtung des Pfeils in der Figur 2. Unterhalb des Flansches 50 ist ein zur Drehachse der Schneidscheibe 24 koaxialer Ring 56 befestigt, beispielsweise angeschraubt oder angeschweißt oder einteilig mit dem Flansch 50 tiefgezogen. Um den Umfang des Ringes 56 sind in der dargestellten Ausführungsform insgesamt drei Schlagkörper 48 äquidistant verteilt, obwohl auch mehr oder weniger Schlagkörper 48 Verwendung finden könnten. Der Ring 56 ist an seinem unteren Ende nach außen abgekantet, um die Stabilität zu vergrößern. Die Längsachsen der Schlagkörper 48 erstrecken sich radial zur Drehachse der Schneidscheibe 24. Sie können mit dem Ring 56 verschraubt oder verschweißt oder auf beliebige andere Weise damit verbunden sein. Die Schlagkörper 48 weisen einen näherungsweise halbkreisförmigen Querschnitt auf, wobei der Halbkreis die in Drehrichtung vorlaufende Fläche bildet und die nachlaufende Fläche eben ist. Auch in Umfangsrichtung sind die Schlagkörper 48 abgerundet; ihre vorlaufende Fläche bildet somit auch bezüglich der Umfangsrichtung (d.h. bei Draufsicht auf die Schlagkörper 48 von oben her) einen Kreisbogen.

Die Figur 3 zeigt eine zweite Ausführungsform, die mit der ersten Ausführungsform der Figur 2 größtenteils übereinstimmt. Es unterscheidet sich lediglich die Form der Schlagkörper 48', die in der zweiten Ausführungsform einen kreisförmigen Querschnitt aufweisen und deren äußeren Enden halbkugelförmig gestaltet sind. Die Schlagkörper 48' sind, wie auch die Schlagkörper 48 der ersten Ausführungsform, vorzugsweise massiv, d.h. ohne Hohlräume ausgebildet.

Die Figur 4 veranschaulicht die Wirkungsweise der erfindungsgemäßen Maschine 10. Bei der Ernte auf dem Feld werden die dort stehenden Pflanzen 58 durch die Schneidscheiben 24 von im Boden verbleibenden Stoppeln 60 abgetrennt. Die oberen Teile der Pflanzen 58 werden durch die Ausbuchtungen 26 der Förderelemente 28 aufgenommen und durch die Förderelemente 28 ggf. im Zusammenwirken mit den Querfördertrommeln 34, 36 und mit den Abgabefördertrommeln 40 in den Einzugskanal 46 eingeführt, wobei ein Vordruckbügel 62 die Pflanzen 58 nach und nach in eine horizontale Stellung überführt.

Die im Erdboden verbleibenden Stoppeln 60 kommen zeitlich kurz nach dem Abschneiden der Pflanzen 58 durch die Schneidscheiben 24 in Berührung mit wenigstens einem der von der Schneidscheibe 24 nach unten beabstandeten Schlagkörper 48 oder 48'. Die Schlagkörper 48 oder 48' versetzen den Stoppeln 60 einen stumpfen Schlag, da sie aufgrund ihrer in axialer Richtung und Umfangsrichtung konvex abgerundeten Form mit einer relativ stumpfen Oberfläche auf die Stoppeln 60 auftreffen. Durch diesen stumpfen Schlag wird der Stoppel 60 weitestgehend zerfasert, wie in der Figur 4 gezeigt. Diese zerfaserten Stoppeln 60 bieten dem Maiszünsler keinen hinreichenden Raum für die Überwinterung.

Bei bisher üblichen, relativ scharfkantigen Schlagkörpern findet nur ein geringfügiges Zerspleissen der Stoppeln 60 statt, die den Überwinterungsraum des Maiszünslers in den Stoppeln fast unbeeinträchtigt lässt. Die erfindungsgemäßen Schlagkörper 48, 48' weisen demgegenüber eine wesentlich bessere Wirkung auf. Diese Zerfaserungswirkung auf die Stoppeln 60 hängt von der Umfangsgeschwindigkeit der Schlagkörper 48, 48' ab, welche wiederum durch die Drehzahl und den Durchmesser des Rings 56 vorgegeben ist. Außerdem hängt die Zerfaserungswirkung davon ab, wie viele Schlagkörper 48, 48' um den Ring 56 verteilt sind. Erfahrungsgemäß führen bevorzugte Umfangsgeschwindigkeiten der Schlagkörper 48, 48' von 15 bis 90 m/s bei drei um den Umfang der Schneidscheibe 24 verteilten Schlagkörpern 48, 48' zu hinreichend guten Zerfaserungswirkungen auf die Stoppeln 60.

## Patentansprüche

1. Maschine (10) zur Ernte stängelartiger Pflanzen (58) mit einer oder mehreren seitlich nebeneinander angeordneten Mäh- und Einzugseinrichtungen (14-21), die jeweils eine untere Schneidscheibe (24) zum Abschneiden von Pflanzenstängeln von im Erdboden verbleibenden Stoppeln (60) und über der Schneidscheibe (24) übereinander angeordnete Förderelemente (28) mit um ihren Umfang verteilten Aussparungen (26) zur Aufnahme und Förderung der Pflanzenstängel umfassen, wobei unterhalb der Schneidscheibe (24) ein in Drehung versetzbarer Schlagkörper (48, 48') mit einer stumpfen vorlaufenden Fläche angeordnet ist und die vorlaufende Fläche des Schlagkörpers (48, 48') in axialer Richtung und/oder in der Umfangsrichtung der Schneidscheibe (24) konvex abgerundet ist, **dadurch gekennzeichnet, dass** der Schlagkörper (48, 48') am Außenumfang eines sich koaxial zur Drehachse der durch einen Antrieb in Drehung versetzbaren Schneidscheibe (24) erstreckenden Ringes (56) angebracht ist, der mit einem Flansch (50) verbunden ist, an dem Segmente der Schneidscheibe (24) befestigt sind.

2. Maschine (10) nach Anspruch 1, wobei der Querschnitt des Schlagkörpers (48, 48') kreisförmig oder halbkreisförmig ist.

3. Maschine (10) nach Anspruch 1 oder 2, wobei mehrere Schlagkörper (48, 48') äquidistant um ihre Drehachse verteilt sind.

## Claims

1. Machine (10) for harvesting stalk-like plants (58), having one or more mowing and draw-in means (14-21) arranged laterally beside one another, which each comprise a lower cutting disc (24) for cutting off plant stalks from stubble (60) remaining in the ground and conveying elements (28) arranged above one another above the cutting disc (24) and having cut-outs (26) distributed over their circumference for picking up and conveying the plant stalks, an impact body (48, 48') that can be set rotating and has a blunt leading surface being arranged below the cutting disc (24), and the leading surface of the impact body (48, 48') being convexly rounded in the axial direction and/or in the circumferential direction of the cutting disc (24), **characterized in that** the impact body (48, 48') is fitted to the outer circumference of a ring (56) which extends coaxially with respect to the axis of rotation of the cutting disc (24) that can be set rotating by a drive and which is connected to a flange (50) to which segments of the cutting disc (24) are fixed.

2. Machine (10) according to Claim 1, wherein the cross section of the impact body (48, 48') is circular or semicircular.

3. Machine (10) according to Claim 1 or 2, wherein multiple impact bodies (48, 48') are distributed equidistantly around their axis of rotation.

## Revendications

1. Machine (10) pour la récolte de plantes à tiges (58), comprenant un ou plusieurs dispositifs de coupe et d'amenée (14-21) disposés latéralement les uns à côté des autres, qui comprennent chacun un disque de coupe inférieur (24) pour couper les tiges de chaumes (60) restant dans la terre et des éléments de transport disposés les uns au-dessus des autres (28) au-dessus du disque de coupe (24) avec des évidements (26) répartis autour de leur périphérie pour recevoir et transporter les tiges, un corps de battage (48, 48') pouvant être mis en rotation, avec une surface avant émoussée, étant disposé en dessous du disque de coupe (24), et la surface avant du corps de battage (48, 48') étant arrondie sous forme convexe dans la direction axiale et/ou dans la direction périphérique du disque de coupe (24), **caractérisée en ce que** le corps de battage (48, 48') est monté au niveau de la périphérie extérieure d'un anneau (56) s'étendant coaxialement par rapport à l'axe de rotation du disque de coupe (24) pouvant être mis en rotation par un entraînement, lequel anneau est connecté à une bride (50) au niveau de laquelle sont fixés des segments du disque de coupe (24).

2. Machine (10) selon la revendication 1, dans laquelle la section transversale du corps de battage (48, 48') est réalisée sous forme circulaire ou semi-circulaire.

3. Machine (10) selon la revendication 1 ou 2, dans laquelle plusieurs corps de battage (48, 48') sont répartis de manière équidistante autour de leur axe de rotation.
